# EUROPÄISCHE PATENTSCHRIFT

(11) **EP 1 118 534 B1**
(45) Veröffentlichungstag und Bekanntmachung des Hinweises auf die Patenterteilung: **24.08.2005**
(21) Anmeldenummer: 01100931.3
(22) Anmeldetag: 17.01.2001
(51) Int. Cl.: B62M 25/04

(54) **Schalteinrichtung für Fahrradgetriebe**
Shifter for bicycle transmission
Changement de vitesse pour transmission de bicyclette

(30) Priorität: 22.01.2000 DE 10002741
(43) Veröffentlichungstag der Anmeldung: 25.07.2001
(73) Patentinhaber: SRAM Deutschland GmbH, 97404 Schweinfurt (DE)
(72) Erfinder: Blaschke, Georg, 97505 Geldersheim (DE)

(56) Entgegenhaltungen:
- EP-A- 0 647 557
- DE-C- 4 409 251
- DE-U- 9 015 515
- FR-A- 2 701 917
- US-A- 5 673 594
- US-A- 5 682 794
- US-A- 5 732 593
- US-A- 5 791 195

## Beschreibung

Die Erfindung betrifft einen Schalter zur Betätigung von Fahrradgetrieben gemäß dem Oberbegriff des Anspruchs 1.

Aus dem deutschen Gebrauchsmuster 90 15 515 ist ein Schrittschalter zur Steuerung von Fahrradgetrieben bekannt geworden, dessen Hebel mit einem Klinkenpaar ausgestattet ist, mit dessen Hilfe über eine Zahnscheibe, die mit einer Seilspule in Verbindung steht, zielgenau der jeweilige Gang mit den gewünschten Wegen oder auch Überschaltwegen zu schalten ist, wobei die Betätigungswege immer gleich sind und der Hebel nach erfolgter Betätigung immer in seine Bereitschaftsstellung zurückkehrt. Zum Halten der Seilspule in der jeweils eingeschalteten Position sind Friktions- oder Positionierungseinrichtungen vorgesehen, die im Gehäuse des Schalters angeordnet sind und mit der Seilspule bzw. der Zahnscheibe zusammenwirken. Die Klinken sind am Hebel in Bezug auf das Gehäuse derart angeordnet, dass beim Einrasten einer Klinke in die Zahnscheibe die jeweils andere Klinke durch einen mit dem Gehäuse verbundenen Aushebebogen ausgehoben wird und somit hinsichtlich des Schaltvorganges außer Funktion bleibt. Der Schalter ist als Triggerschalter mit der Möglichkeit der Schaltung jeweils eines Ganges in beide Richtungen ausgelegt. Mehrere Gangstufen könnten mit dieser Lösung ebenfalls geschaltet werden, was aber für die Erklärung des Schaltprinzips unerheblich ist.

In US 5 682 794 ist ein Schalter offenbart, der über eine Positioniereinrichtung wie der Schalter aus DE-GM 90 15 515 verfügt. Die Einrichtung zum Aufnehmen des Seilzuges wird dadurch in ihrer Position gehalten, dass ein mit einer Federkraft beaufschlagtes Element in eine Vertiefung gedrückt wird und dort einrastet. Bei entsprechend großen Kräften kann die Federkraft überwunden werden und es kommt zum Ausrasten.
Somit kann mit einem solchen Schalter nicht sichergestellt werden, dass bei unter Umständen am Betätigungsseilzug auftretenden großen Zugkräften die eingeschaltete Gangposition auch beibehalten wird.

Mit dem Schalter ist es möglich, das Betätigungselement in verschiedene, senkrecht voneinander getrennte Ebenen zu bringen und dann in der eingenommenen Ebene zu bewegen. Bei einem gleich großen Betätigungsweg kann über eine oder mehrere Gangstufen geschaltet werden, in Abhängigkeit von der Ebene, in welches das Betätigungselement vorher gebracht wurde.

Ein Schalten über mehrere Gangstufen nur in Abhängigkeit von der Länge des Schaltweges ist mit diesem Schalter nicht möglich.

In EP 0 647 557 ist ein Triggerschalter entsprechend dem Oberbegriff von Anspruch 1 gezeigt, bei dem die Bedienhebel nach der Betätigung in die Ausgangsposition zurückkehren. Der Triggerschalter verfügt über insgesamt drei Kinken, die in korrespondierende Rastverzahnungen eingreifen.

Eine dieser Klinken ist am Hebel für die Bewegung zum Einholen des Seilzuges angeordnet, zwei weitere, wechselweise eingreifende Halteklinken dienen dem Halten und schrittweisen Freigeben des Seilzuges. In der Freigaberichtung kann eine Bewegung nur erfolgen, wenn die Halteklinken aktiv aus der Rastverzahnung gebracht werden. Mit einer vollen Betätigung des Bedienhebels, der dem Freigeben dient, erfolgt eine Freigabeoperation bis zur nächsten, benachbarten Gangposition.

Das Wesen eines Triggerschalters wird hinsichtlich seiner Betätigung ausreichend klar definiert, wird jedoch technisch nicht ausreichend bezüglich der einzelnen Gangpositionen der Seilspule verwirklicht. Die Position der Seilspule für die einzelnen Gänge wird durch eine Rasteinrichtung gebildet, die nur bis zu einer bestimmten Haltekraft wirkt und möglicherweise auch die Positionierung von exakten Überschaltwegen verhindert.

Dem gegenüber wird in dem hier vorgeschlagenen Schalter nicht nur die Verschiebung eines Bewegungselementes in eindeutiger Weise auf eine oder mehrere Gangstufen durchgeführt, sondern es wird dieses Bewegungselement, welches mit einem Übertragungsmittel verbunden ist, in der jeweiligen Gangstufe gehalten, wobei es möglich ist, Überschaltwege, insbesondere bei der Verschiebung des Bewegungselementes in einer Spannrichtung, von beliebiger Größe zu berücksichtigen. Dabei kann der Schalter mit einem einzigen Bedienungselement ausgestattet sein oder aber in einer abgewandelten Form ein Spannelement zum Spannen des Übertragungsmittels und ein Freigabeelement zur Freigabe des Übertragungsmittels aufweisen. In jedem Fall wird das Bewegungselement durch den Eingriff von Klinken in Rastverzahnungen in seiner Position verändert, wobei das Bewegungselement seinerseits über eine Klinke mit einer Rastverzahnung am Gehäuse in Verbindung steht. Das Zusammenwirken aller Klinken, die steuerbar sind und je nach Bewegungsrichtung entweder im Eingriff sind oder aber ausgehoben werden müssen, wird durch ein Übertragungselement unterstützt, welchem in erster Linie die Aufgabe zukommt, die Schaltungswege durch das Bedienungselement aufzunehmen und die Klinke zu steuern, die zwischen dem Gehäuse und dem Bewegungselement angeordnet ist. Eine solche Steuerung kommt insbesondere in der Freigaberichtung durch Ausheben der Klinke in Frage, wodurch das Bewegungselement über die Zugkraft des Übertragungsmittels zur nächsten Gangposition geschoben wird. Das Bedienungselement bzw. das Spannelement und das Freigabeelement sind durch hier nicht dargestellte Federn in einer Mittellage gehalten, in die sie nach erfolgter Schaltung ohne Krafteinwirkung wieder zurückkehren. Dabei ist es unerheblich, ob nur eine Gangstufe oder mehrere Gangstufen in einer Richtung geschaltet worden sind.

Was die Ausführung des vorgeschlagenen Schalters betrifft, so kann dieser als Drehgriffschalter, Drehschalter, Daumenschalter, Tastenschalter in translatorischer oder rotatorischer Bewegungsrichtung ausgeführt sein. In jedem Fall aber handelt es sich um ein Gehäuse mit einer Rastverzahnung, in welcher eine steuerbare Klinke eingreift, die mit dem Bewegungselement verbunden ist. Die steuerbare Klinke wird wiederum durch einen Aushebefinger am Übertragungselement gesteuert, wobei dieses Übertragungselement ebenfalls durch eine steuerbare Klinke mit entweder dem Bedienungselement oder dem Freigabeelement verbunden ist. Das Spannelement kann über eine steuerbare Klinke direkt mit dem Spannelement verbunden sein, wobei die vorgenannten beiden Klinken gegeneinander gerichtet sind und jeweils durch eine Aushebenase gesteuert werden können. Die Aushebenasen können mit dem Gehäuse verbunden sein, da sie je nach Bedienungsrichtung die eine oder die andere Klinke dann aussteuern müssen, wenn das Bedienungselement bzw. das Spannelement oder Steuerelement ihre Mittellage verlassen.

Es ergibt sich somit als Aufgabe für die Erfindung, einen Triggerschalter zu schaffen, der mit einem Fahrradgetriebe durch ein Übertragungsmittel verbunden ist, bei welchem jede Gangstufe formschlüssig und daher genau herstellbar ist, wobei ein Bedienungselement auch dann in seine Ausgangslage zurückkehrt, wenn mehr als eine Gangstufe in einer der beiden Richtungen geschaltet wird.

Die Lösung der Aufgabe ist im Kennzeichen des Hauptanspruches beschrieben. Ausgestaltungen sind den Unteransprüchen zu entnehmen.

Anhand von vier Skizzen wird die Wirkungsweise eines Triggerschalters mit einem formschlüssig positionierbaren Übertragungsmittel zu einem Fahrradgetriebe erläutert. Es zeigen:
- Figur 1: einen klinkengesteuerten Schalter mit einem Gehäuse und einem Bedienungselement, welches ein Bewegungselement steuern kann, das durch ein Übertragungsmittel mit dem Getriebe des Fahrrades verbunden ist;
- Figur 2: einen klinkengesteuerten Schalter mit einem Spannelement und einem Freigabeelement zur Steuerung des Bewegungselementes, wobei das Spannelement über eine Klinke mit dem Bewegungselement und das Freigabeelement über ein Übertragungselement mit dem Bewegungselement verbunden ist;
- Figur 3: einen klinkengesteuerten Schalter mit einem Bedienungselement, welches mit dem Bewegungselement durch ein Übertragungselement verbunden ist;
- Figur 4: einen klinkengesteuerten Schalter analog der Ausführung gemäß Fig. 3, bei welchem ein Spannelement und ein Freigabeelement unabhängig voneinander durch das Übertragungselement mit dem Bewegungselement verbunden sind.

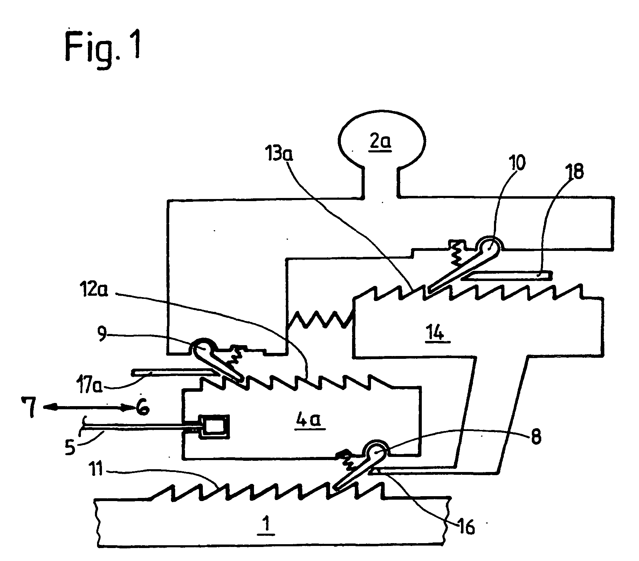

Ein klinkengesteuerter Triggerschalter weist ein Gehäuse 1 auf, welches mit einer ersten Rastverzahnung 11 versehen ist, in die eine erste Klinke 8 eingreift, welche gemäß Fig. 1 an einem Bewegungselement 4a federnd angeordnet ist. Das Bewegungselement 4a ist mit einem Übertragungsmittel 5 verbunden, welches die Gangstufen eines Fahrradgetriebes steuern kann. Zumeist besteht dieses Übertragungsmittel 5 aus einem Zugseil, welches in einer Spannrichtung 6 von einer im Getriebe des Fahrrades wirkenden Feder unter Zugspannung gehalten wird. In einer Freigaberichtung 7, die der Spannrichtung 6 entgegengerichtet ist, kann das Übertragungsmittel 5 nachgelassen werden, wodurch die Gangstufen im Getriebe durch die Federarbeit geschaltet werden. Die erste Klinke 8 kann aus der ersten Rastverzahnung 11 durch einen Aushebefinger 16 ausgehoben werden, der an einem Übertragungselement 14 angeordnet ist und bei einer Ortsveränderung des Bewegungselementes 4a der ersten Klinke 8 in der Freigaberichtung 7 nachgeführt wird, so dass bei Änderung der Schaltrichtung in die Spannrichtung 6 die erste Klinke 8 sogleich ausgehoben werden kann. Das Bewegungselement 4a ist über eine zweite Klinke 9 mit einem Bedienungselement 2a verbunden, wobei die zweite Klinke 9 in eine zweite Rastverzahnung 12a eingreift und ihrerseits im Bedienungselement 2a federnd gelagert ist. Die zweite Klinke 9 kann durch eine erste Aushebenase 17a ausgehoben werden, insbesondere dann, wenn das Bedienungselement 2a in der Freigaberichtung bewegt wird. Das Bedienungselement 2a ist ferner durch eine dritte Klinke 10 mit dem Übertragungselement 14 verbunden, wobei die dritte Klinke 10 im Bedienungselement federnd gelagert ist und in eine dritte Rastverzahnung 13a am Übertragungselement eingreift. Die dritte Klinke 10 kann durch eine zweite Aushebenase 18 ausgehoben werden, insbesondere dann, wenn das Bedienungselement 2a in der Spannrichtung 6 bewegt wird.

Die erste Klinke 8 ist der Zugkraft der Feder im Getriebe entgegengerichtet und stützt sich in der ersten Rastverzahnung 11 bei Positionierung einer der Gangstufen im Getriebe gegen das Gehäuse 1 ab. Soll das Bewegungselement 4a in der Freigaberichtung 7 bewegt werden, so muss die erste Klinke 8 aus der ersten Rastverzahnung 11 durch den Aushebefinger 16 ausgehoben werden. Das Schalten der Gangstufen in der Freigaberichtung 7 ist somit nur durch Bewegung des Bedienungselementes 2a in der Freigaberichtung 7 möglich, wodurch das Übertragungselement 14 von der in der dritten Rastverzahnung 13 in Eingriff befindlichen dritten Klinke 10 mitgenommen wird und der Aushebefinger 16 die erste Klinke 8 aus der ersten Rastverzahnung 11 des Gehäuses 1 aushebt, wodurch dem Bewegungselement 4a eine Weiterbewegung in die nächste Raststufe der ersten Rastverzahnung 11 ermöglicht wird. Die zweite Klinke 9 wird bei einer Bewegung des Bedienungselementes 2a aus der zweiten Rastverzahnung 12a des Bewegungselementes 4a ausgehoben, wodurch die zweite Klinke 9 der Bewegung des Bewegungselementes 4a in der Freigaberichtung 7 nicht mehr im Wege steht. Soll das Bewegungselement 4a das Übertragungsmittel 5 in der Spannrichtung 6 transportieren, so erfolgt dies einfacherweise über die zweite Klinke 9, die in die zweite Rastverzahnung 12a des Bewegungselementes 4a eingreift und dieses auf direktem Wege mitnimmt, bis der Weg einer gewünschten Gangstufe erreicht ist. In diesem Fall wird das federnd mit dem Bedienungselement 2a verbundene Übertragungselement 14 mitgenommen, wodurch der Aushebefinger 16 von der ersten Klinke 8 ebenfalls zurückweicht und ihr den Eingriff in die erste Rastverzahnung 11 des Gehäuses 1 nicht verwehrt. Ungeachtet dessen, wie viele Gangstufen durchgeschaltet werden sollen, wird bei Erzeugung eines gewissen Überschaltweges das Einrasten der ersten Klinke 8 in die erste Rastverzahnung 11 des Gehäuses 1 ermöglicht, wobei nach Rückkehr des Bedienungselementes 2a das Bewegungselement 4a bis zur endgültigen Einrastung der ersten Klinke 8 in die erste Rastverzahnung 11 sich eine Rückführung des Überschaltweges ergibt.

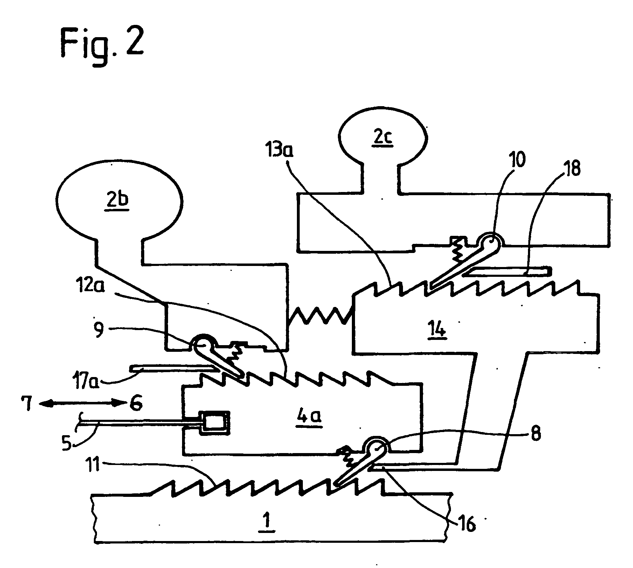

Gemäß Fig. 2 wird ein Schalter beschrieben, der sich von dem gemäß Fig. 1 dadurch unterscheidet, dass das Bedienungselement 2a unterteilt wird in ein Spannelement 2b und ein Freigabeelement 2c. Das Spannelement 2b kann unabhängig vom Freigabeelement 2c bedient werden, was dadurch erreicht wird, dass das Spannelement 2b mit dem Übertragungselement 14 vorzugsweise durch eine Feder verbunden ist, wodurch eine indirekte Verbindung zwischen dem Spannelement 2b und dem Freigabeelement 2c hergestellt ist. Es wird nämlich bei Bedienung des Spannelementes 2b das Übertragungselement 14 und mit diesem das Freigabeelement 2c in der Spannrichtung 6 solange weitertransportiert, bis die im Freigabeelement 2c positionierte dritte Klinke 10 sich aus der dritten Rastverzahnung 13a im Übertragungselement 14 dadurch löst, dass sie von der zweiten Aushebenase 18 ausgehoben wird. Das Spannelement 2b ist über die zweite Klinke 9 mit der Rastverzahnung 12a des Bewegungselementes 4a verbunden, wodurch sich in Bezug auf die Funktion beim Spannen des Spannelementes 4a gegenüber dem Schalter gemäß Fig. 1 nichts ändert. Ebenso ändert sich bei der Bewegung des Freigabeelementes 2c in der Freigaberichtung hinsichtlich der Aushebung der ersten Klinke 8 aus der ersten Rastverzahnung 11 des Gehäuses 1 nichts, da der Aushebefinger 16 des Übertragungselementes 14 diese erste Klinke 8 sofort aushebt.

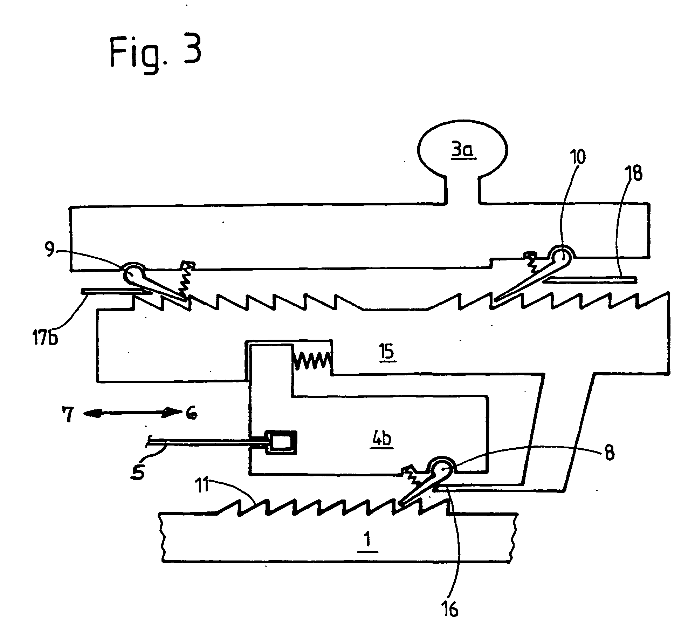

Gemäß Fig. 3 wird ein Schalter beschrieben, dessen Funktion der des Schalters gemäß Fig. 1 entspricht, dessen Ausführung jedoch insofern von diesem verschieden ist, als ein Bedienungselement 3a mit der zweiten Klinke 9 und der dritten Klinke 10 bestückt ist, wobei die zweite Klinke 9 durch eine erste Aushebenase 17b und die dritte Klinke 19 durch die zweite Aushebenase 18 gesteuert werden. Die zweite Klinke 9 ist der dritten Klinke 10 entgegengerichtet, wobei beide Klinken 9 und 10 auf ein Übertragungselement 15 wirken, auf dem die zweite Rastverzahnung 12a und die dritte Rastverzahnung 13a ebenfalls gegeneinander gerichtet angeordnet sind. Ein Bewegungselement 4b wird vom Übertragungselement 15 sowohl in der Spannrichtung wie auch in der Freigaberichtung 7 mitgenommen, wobei zur Realisierung von geringfügigen Aushebewegen das Bewegungselement 4b mit dem Übertragungselement 15 über eine Feder verbunden sein kann. Das Übertragungselement 15 weist ebenfalls wie die vorgenannten Schalter den Aushebefinger 16 auf, der die erste Klinke 8 aus ihrer ersten Rastverzahnung 11 dann aushebt, wenn in Freigaberichtung geschaltet wird. Die Aushebenasen 17b und 18 sind derart platziert, dass die zweite Klinke 9 und auch die dritte Klinke 10 in ihre Rastverzahnungen 12a und 13a eingreifen, sofern das Bedienungselement 3a in der von hier nicht gezeigten Federn definierten Ruhelage steht. Wird das Bedienungselement 3a in der Spannrichtung 6 bewegt, so befördert die zweite Klinke 9 das Übertragungselement 15 in eben dieser Spannrichtung 6, wobei die dritte Klinke 10 durch die Aushebenase 18 schon bei geringer Verschiebung des Bedienungselementes 3a ausgehoben wird. Es ist nun der Weg frei für eine Verschiebung des Bewegungselementes 4b, welches vom Übertragungselement 15 ohne Verzögerung mitgenommen wird, wobei die erste Klinke 8 die erste Rastverzahnung 11 des Gehäuses 1 überspringt und immer eingriffsbereit bleibt, da der Aushebefinger 16 mit dem Übertragungselement 15 zurückweicht. Hinsichtlich der Übertragung einer Bewegung in der Freigaberichtung 7 kehren sich die Verhältnisse um und das Übertragungselement 15 wird vom Bedienungselement 3a in der Freigaberichtung 7 verschoben, wobei die Aushebenase 17b die zweite Klinke 9 zur Freigabe der Bewegung für das Übertragungselement 15 aushebt. Für den Fall einer nicht sofort möglichen Aushebung der ersten Klinke 8 aus der ersten Rastverzahnung 11 des Gehäuses 1 ist eine federnde Mitnahme des Bewegungselementes 4b durch das Übertragungselement 15 vorgesehen, die die Aushebung der ersten Klinke 8 bewirkt, bevor das Bewegungselement 4b in der Freigaberichtung 7 transportiert wird. Für diesen Fall ist es möglich, die Schaltung des Fahrradgetriebes durch entsprechende Ausbildung der Federverbindung des Bewegungselementes 4b mit dem Übertragungselement 15 so zu gestalten, dass sie mit hoher Geschwindigkeit abläuft, da die erste Klinke 8 in den Eingriff mit dem folgenden Zahn der ersten Rastverzahnung 11 von der Feder des Getriebes gezogen wird.

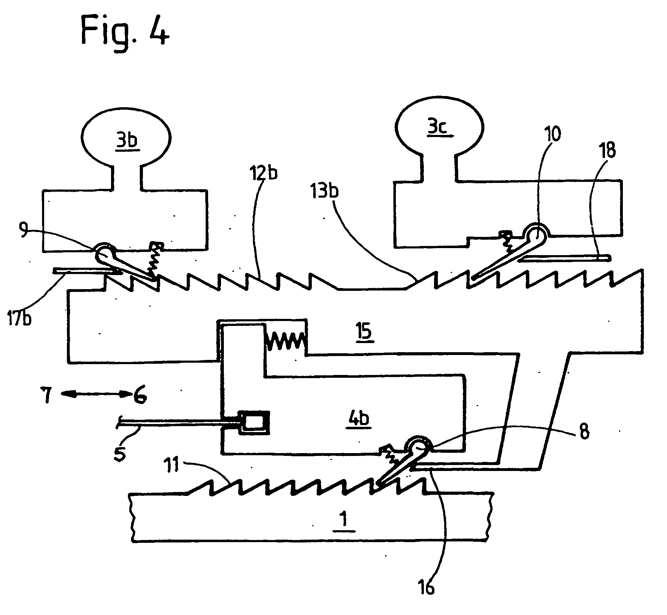

Gemäß Fig. 4 wird ein Schalter vorgeschlagen, bei dem das Bedienungselement 3a gemäß Fig. 3 in ein Spannelement 3b und ein Freigabeelement 3c aufgeteilt wird. In diesem Fall ändert sich für die Bewegung des Bewegungselementes 4b in beide Richtungen 6 und 7 nichts, lediglich erzeugt das Schalten des Spannelementes 3b eine gewisse Bewegung des Freigabeelementes 3c, die solange währt, bis die dritte Klinke 8 aus der Rastverzahnung 13b ausgehoben ist. Umgekehrt ist die Bewegung im Spannelement 3b zu registrieren, wenn des Freigabeelement 3c in der Freigaberichtung 7 bewegt wird.

Der Vorteil des Schaltprinzips gemäß den Schaltern nach den Fig. 1 bis 4 liegt darin, dass mit diesem eine Vielzahl von Triggerschaltern dargestellt werden können, die an den unterschiedlichsten Orten eines Fahrrades angeordnet sein können, wobei die Herstellung der Schalter in Kunststoffbauweise kostengünstig ist und die Schaltbarkeit von einer oder mehreren Gangstufen im Fahrradgetriebe durch die formschlüssige Wegübertragung in ausreichend hoher Präzision dargestellt werden kann.

### Bezugszeichenliste

- 1: Gehäuse
- 2a: Bedienungselement
- 2b: Spannelement
- 2c: Freigabeelement
- 3a: Bedienungselement
- 3b: Spannelement
- 3c: Freigabeelement
- 4a: Bewegungselement
- 4b: Bewegungselement
- 5: Übertragungsmittel
- 6: Spannrichtung
- 7: Freigaberichtung
- 8: erste Klinke
- 9: zweite Klinke
- 10: dritte Klinke
- 11: erste Rastverzahnung
- 12a: zweite Rastverzahnung
- 12b: zweite Rastverzahnung
- 13a: dritte Rastverzahnung
- 13b: dritte Rastverzahnung
- 14: Übertragungselement
- 15: Übertragungselement
- 16: Aushebefinger
- 17a: erste Aushebenase
- 17b: erste Aushebenase
- 18: zweite Aushebenase

## Patentansprüche

1. Schalter zur Betätigung mindestens eines Getriebes an einem Fahrrad, umfassend
- ein Gehäuse (1),
- ein Bewegungselement (4a, 4b), an welchem ein Übertragungsmittel (5) zum Steuern des Getriebes in einer Spannrichtung (6) und in einer Freigaberichtung (7) angeordnet ist;
wobei die einzelnen Gangstufen im Schalter über drei steuerbare Klinken (8, 9, 10) formschlüssig darstellbar sind;
wobei der Schalter als Triggerschalter ausgebildet ist, bei dem ein Bedienelement (3a) bzw. ein Spann- und ein Freigabeelement (3b, 3c) nach erfolgter Schaltung in die Mittellage zurückkehren
**dadurch gekennzeichnet,**
**dass** die erste Klinke (8) am Bewegungselement (4a, 4b) angeordnet ist und mit einer ersten Rastverzahnung (11) im Gehäuse (1) zusammenwirkt und dem Halten des Bewegungselementes (4a, 4b) in einer Raststufe der Rastverzahnung (11) dient sowie zur Ermöglichung einer Bewegung des Bewegungselementes (4a, 4b) in der Freigaberichtung (7) durch einen Aushebefinger (16) aus der Rastverzahnung (11) ausgehoben werden kann;
und wobei in der Spannrichtung (6) wie auch in der Freigaberichtung (7) mit einer einzigen Schaltbewegung in Abhängigkeit von der Länge des Schaltweges in der Spannrichtung (6) und in der Freigaberichtung (7) über eine oder mehrere Gangstufen durchgeschaltet werden kann.

2. Schalter nach Anspruch 1,
**dadurch gekennzeichnet,**
**dass** der Schalter ein Bedienungselement (2a,3a) aufweist, das sowohl in der Spannrichtung (6) wie auch in der Freigaberichtung (7) zum Gangwechsel bedienbar ist, und in seine Ausgangsposition zurückkehrt, wenn der Schaltvorgang abgeschlossen ist.

3. Schalter nach Anspruch 1 oder 2,
**dadurch gekennzeichnet,**
**dass** der Schalter ein Spannelement (2b,3b) zum Verschieben des Bewegungselementes (4a,4b) in der Spannrichtung (6) und ein Freigabeelement (2c,3c) zum Verschieben des Bewegungselementes (4a,4b) in der Freigaberichtung (7) aufweist, wobei das Spannelement (2b,3b) und das Freigabeelement (2c,3c) nach erfolgtem Schaltvorgang jeweils in ihre Ausgangspositionen zurückkehren.

4. Schalter nach einem der Ansprüche 1 bis 3,
**dadurch gekennzeichnet,**
**dass** das Bedienungselement (2a,3a) mit dem Bewegungselement (4a,4b) über eine erste Klinke (8), eine zweite Klinke (9) und eine dritte Klinke (10) in Wirkverbindung steht, wobei ein Übertragungselement (14,15) zur Übertragung von Steuerbewegungen zwischen dem Bedienungselement (2a,3a) und dem Bewegungselement (4a,4b) angeordnet ist.

5. Schalter nach Anspruch 4,
**dadurch gekennzeichnet,**
**dass** das Übertragungselement (14,15) einen Aushebefinger (16) aufweist, der mit der ersten Klinke (8) zusammenwirkt, um das Bewegungselement (4a,4b) in Freigaberichtung (7) freizugeben.

6. Schalter nach Anspruch 1 oder 5,
**dadurch gekennzeichnet,**
**dass** die erste Klinke (8) zwischen dem Gehäuse (1) und dem Bewegungselement (4a,4b) angeordnet ist.

7. Schalter nach Anspruch 6,
**dadurch gekennzeichnet,**
**dass** die erste Klinke (8) an dem Bewegungselement (4a,4b) angeordnet ist und mit der ersten Rastverzahnung (11) am Gehäuse (1) zusammenwirkt.

8. Schalter nach einem der Ansprüche 1 bis 7,
**dadurch gekennzeichnet,**
**dass** eine zweite Klinke (9) zwischen dem Bewegungselement (4a) und dem Bedienungselement (2a) zur Mitnahme des Bewegungselementes (4a) in Spannrichtung (6) angeordnet ist.

9. Schalter nach Anspruch 8,
**dadurch gekennzeichnet,**
**dass** die zweite Klinke (9) am Bedienungselement (2a) angeordnet ist und mit einer zweiten Rastverzahnung (12a) am Bewegungselement (4a) zusammenwirkt.

10. Schalter nach einem der Ansprüche 1 bis 9,
**dadurch gekennzeichnet,**
**dass** die zweite Klinke (9) zwischen dem Bewegungselement (4a) und dem Spannelement (2b) zur Mitnahme des Bewegungselementes (4a) in Spannrichtung (6) angeordnet ist.

11. Schalter nach Anspruch 10,
**dadurch gekennzeichnet,**
**dass** die zweite Klinke (9) am Spannelement (2b) angeordnet ist und mit der zweiten Rastverzahnung (12a) am Bewegungselement (4a) zusammenwirkt.

12. Schalter nach Anspruch 1 oder 3,
**dadurch gekennzeichnet,**
**dass** eine dritte Klinke (10) zwischen einem dem Übertragungselement (14) und dem Freigabeelement (2c) zur Freigabe des Bewegungselementes (4a) in Freigaberichtung (6) angeordnet ist.

13. Schalter nach Anspruch 12,
**dadurch gekennzeichnet,**
**dass** die dritte Klinke (10) am Freigabeelement (2c) angeordnet ist und mit einer dritten Rastverzahnung (13a) am Übertragungselement (14) zusammenwirkt.

14. Schalter nach einem der Ansprüche 1 bis 13,
**dadurch gekennzeichnet,**
**dass** der Schalter eine erste Aushebenase (17a,17b) und/oder eine zweite Aushebenase (18) aufweist, wobei die erste Aushebenase (17a,17b) die zweite Klinke (9) in Freigaberichtung (7) und die zweite Aushebenase (18) die dritte Klinke (10) in Spannrichtung (6) aushebt.

15. Schalter nach Anspruch 14,
**dadurch gekennzeichnet,**
**dass** die Aushebenasen (17a,17b;18) am Gehäuse (1) angeordnet sind.

16. Schalter nach einem der Ansprüche 1 bis 15,
**dadurch gekennzeichnet,**
**dass** die zweite Klinke (9) und die dritte Klinke (10) an einem Bedienungselement (3a) angeordnet sind und beide mit dem Übertragungselement (15) zusammenwirken, wobei am Übertragungselement (15) eine zweite Rastverzahnung (12b) und eine dritte Rastverzahnung (13b) angeordnet sind, die gegeneinander gerichtet sind und der zweiten Klinke (9) die Mitnahme in Spannrichtung (6) und der dritten Klinke (10) die Mitnahme in Freigaberichtung (7) erlaubt.

17. Schalter nach einem der Ansprüche 1 bis 16,
**dadurch gekennzeichnet,**
**dass** die zweite Klinke (9) von der ersten Aushebenase (17b) ausgehoben wird, wenn die dritte Klinke (10) in Freigaberichtung (7) bewegt wird und dass umgekehrt die dritte Klinke (10) von der zweiten Aushebenase (18) ausgehoben wird, wenn die zweite Klinke (9) in Spannrichtung (6) bewegt wird.

18. Schalter nach einem der Ansprüche 1 bis 17,
**dadurch gekennzeichnet,**
**dass** die zweite Klinke (9) zwischen dem Übertragungselement (15) und dem Spann-element (3b) zur Mitnahme des Übertragungselementes (15) und mit diesem des Bewegungselementes (4b) in Spannrichtung (6) angeordnet ist.

19. Schalter nach Anspruch 18,
**dadurch gekennzeichnet,**
**dass** die zweite Klinke (9) am Spannelement (3b) angeordnet ist und mit einer zweiten Rastverzahnung (12b) am Übertragungselement (15) zusammenwirkt.

20. Schalter nach einem der Ansprüche 1 bis 19,
**dadurch gekennzeichnet,**
**dass** die dritte Klinke (10) zwischen dem Übertragungselement (15) und einem Freigabeelement (3c) zur Mitnahme des Übertragungselementes (15) und mit diesem des Bewegungselementes (4b) in Freigaberichtung (7) angeordnet ist.

21. Schalter nach Anspruch 20,
**dadurch gekennzeichnet,**
**dass** die dritte Klinke (10) am Freigabeelement (3c) angeordnet ist und mit einer dritten Rastverzahnung (13b) am Übertragungselement (15) zusammenwirkt.

22. Schalter nach einem der Ansprüche 1 bis 21,
**dadurch gekennzeichnet,**
**dass** das Bewegungselement (4b) mit dem Übertragungselement (15) zumindest in der Spannrichtung (6) eine Formschlussverbindung aufweist.

23. Schalter nach einem der Ansprüche 1 bis 22,
**dadurch gekennzeichnet,**
**dass** die Klinken (8,9,10) schwenkbar mit ihren Elementen (2a,2b,2c;3a,3b,3c; 4a,4b,4c;14,15) verbunden sind, wobei sie von einer Feder unter Vorspannung in ihrer Eingriffsposition gehalten werden.

24. Schalter nach einem der Ansprüche 1 bis 23,
**dadurch gekennzeichnet,**
**dass** die Sperrklinken (8,9,10) aus federndem Material bestehen und an ihrer Befestigung in der Weise gefügt sind, dass sie in den ihnen zugedachten Stellungen im komplett montierten Schalter mit ihren zugeordneten Rastverzahnungen (11; 12a,12b; 13a,13b) zusammenwirken können.

25. Schalter nach Anspruch 24,
**dadurch gekennzeichnet,**
**dass** die Klinken (8,9,10) einteilig mit den Elementen (2a,2b,2c;3a,3b,3c;4a,4b,4c; 14,15) verbunden sind.

26. Schalter nach Anspruch 24 oder 25,
**dadurch gekennzeichnet,**
**dass** die Klinken (8,9,10) aus Kunststoff bestehen.

27. Schalter nach einem der Ansprüche 1 bis 27,
**dadurch gekennzeichnet,**
**dass** die Betätigung des Bewegungselementes (4a,4b) im Sinne einer kinematischen Umkehr nicht durch Ausheben der Klinken (9,10) sondern durch deren Einrasten erfolgt.

## Claims

1. Switch for actuating at least one gear mechanism on a bicycle, comprising
- a housing (1),
- a movement element (4a,4b), on which there is arranged a transmission means (5) for controlling the gear mechanism in a tensioning direction (6) and in a release direction (7),
it being possible for the individual gear stages in the switch to be produced with a form fit via three controllable pawls (8,9,10);
the switch being designed as a trigger switch, in which an operating element (3a) or a tensioning and release element (3b, 3c) return to the centre position after the shifting operation,
**characterized**
**in that** the first pawl (8) is arranged on the movement element (4a, 4b) and interacts with a first latching toothing arrangement (11) in the housing (1), and is used to hold the movement element (4a, 4b) in a latching stage of the latching toothing arrangement (11) and, to allow movement of the movement element (4a, 4b) in the release direction (7), can be disengaged from the latching toothing arrangement (11) by means of a disengagement finger (16);
and it being possible to shift through one or more gear stages in the tensioning direction (6) and in the release direction (7) by means of a single switching movement as a function of the length of the switching displacement in the tensioning direction (6) and in the release direction (7).

2. Switch according to Claim 1, **characterized in that** the switch has an operating element (2a,3a) which can be operated both in the tensioning direction (6) and in the release direction (7) for gear changing and returns into its starting position when the switching operation has been completed.

3. Switch according to Claim 1 or 2, **characterized in that** the switch has a tensioning element (2b,3b) for displacing the movement element (4a,4b) in the tensioning direction (6) and a release element (2c,3c) for displacing the movement element (4a,4b) in the release direction (7), the tensioning element (2b,3b) and the release element (2c,3c) both returning into their starting positions once the switching operation has taken place.

4. Switch according to one of Claims 1 to 3, **characterized in that** the operating element (2a,3a) is in operative connection with the movement element (4a,4b) via a first pawl (8), a second pawl (9) and a third pawl (10), a transmission element (14,15), for transmitting control movements, being arranged between the operating element (2a,3a) and the movement element (4a,4b).

5. Switch according to Claim 4, **characterized in that** the transmission element (14,15) has a disengagement finger (16) which interacts with the first pawl (8) in order to release the movement element (4a,4b) in the release direction (7).

6. Switch according to Claim 1 or 5, **characterized in that** the first pawl (8) is arranged between the housing (1) and the movement element (4a,4b).

7. Switch according to Claim 6, **characterized in that** the first pawl (8) is arranged on the movement element (4a,4b) and interacts with the first latching toothing arrangement (11) on the housing (1).

8. Switch according to one of Claims 1 to 7, **characterized in that** a second pawl (9) is arranged between the movement element (4a) and the operating element (2a) for carrying along the movement element (4a) in the tensioning direction (6).

9. Switch according to Claim 8, **characterized in that** the second pawl (9) is arranged on the operating element (2a) and interacts with a second latching toothing arrangement (12a) on the movement element (4a).

10. Switch according to one of Claims 1 to 9, **characterized in that** the second pawl (9) is arranged between the movement element (4a) and the tensioning element (2b) for carrying along the movement element (4a) in the tensioning direction (6).

11. Switch according to Claim 10, **characterized in that** the second pawl (9) is arranged on the tensioning element (2b) and interacts with the second latching toothing arrangement (12a) on the movement element (4a).

12. Switch according to Claim 1 or 3, **characterized in that** a third pawl (10) is arranged between the transmission element (14) and the release element (2c) for releasing the movement element (4a) in the release direction (7).

13. Switch according to Claim 12, **characterized in that** the third pawl (10) is arranged on the release element (2c) and interacts with a third latching toothing arrangement (13a) on the transmission element (14).

14. Switch according to one of Claims 1 to 13, **characterized in that** the switch has a first disengagement nose (17a,17b) and/or a second disengagement nose (18), the first disengagement nose (17a,17b) disengaging the second pawl (9) in the release direction (7) and the second disengagement nose (18) disengaging the third pawl (10) in the tensioning direction (6).

15. Switch according to Claim 14, **characterized in that** the disengagement noses (17a,17b;18) are arranged on the housing (1).

16. Switch according to one of Claims 1 to 15, **characterized in that** the second pawl (9) and the third pawl (10) are arranged on an operating element (3a) and both interact with the transmission element (15), there being arranged on the transmission element (15) a second latching toothing arrangement (12b) and a third latching toothing arrangement (13b), which are directed counter to one another and allow the second pawl (9) to carry along in the tensioning direction (6) and the third pawl (10) to carry along in the release direction (7).

17. Switch according to one of Claims 1 to 16, **characterized in that** the second pawl (9) is disengaged by the first disengagement nose (17b) if the third pawl (10) is moved in the release direction (7), and wherein, conversely, the third pawl (10) is disengaged by the second disengagement nose (18) if the second pawl (9) is moved in the tensioning direction (6).

18. Switch according to one of Claims 1 to 17, **characterized in that** the second pawl (9) is arranged between the transmission element (15) and the tensioning element (3b) for carrying along the transmission element (15) and, with the latter, the movement element (4b) in the tensioning direction (6).

19. Switch according to Claim 18, **characterized in that** the second pawl (9) is arranged on the tensioning element (3b) and interacts with a second latching toothing arrangement (12b) on the transmission element (15).

20. Switch according to one of Claims 1 to 19, **characterized in that** the third pawl (10) is arranged between the transmission element (15) and a release element (3c) for carrying along the transmission element (15) and, with the latter, the movement element (4b) in the release direction (7).

21. Switch according to Claim 20, **characterized in that** the third pawl (10) is arranged on the release element (3c) and interacts with a third latching toothing arrangement (13b) on the transmission element (15).

22. Switch according to one of Claims 1 to 21, **characterized in that** the movement element (4b) has a form-fitting connection with the transmission element (15) at least in the tensioning direction (6).

23. Switch according to one of Claims 1 to 22, **characterized in that** the pawls (8,9,10) are connected pivotably to their elements (2a,2b,2c;3a,3b,3c;4a,4b,4c;14,15), a spring retaining said pawls under prestressing in their engagement position.

24. Switch according to one of Claims 1 to 23, **characterized in that** the detent pawls (8,9,10) consist of resilient material and are joined at their fastening such that, in the positions intended for them in the completely assembled switch, they can interact with their associated latching toothing arrangements (11;12a,12b;13a,13b).

25. Switch according to Claim 24, **characterized in that** the pawls (8,9,10) are connected integrally to the elements (2a,2b,2c;3a,3b,3c;4a,4b,4c;14,15).

26. Switch according to Claim 24 or 25, **characterized in that** the pawls (8,9,10) consist of plastic.

27. Switch according to one of Claims 1 to 26, **characterized in that** the actuation of the movement element (4a,4b), in the manner of a kinematic reversal, takes place by the pawls (9,10) latching in rather than being disengaged.

## Revendications

1. Dérailleur pour l'actionnement d'au moins une transmission sur une bicyclette, comprenant :
- un boîtier (1),
- un élément mobile (4a, 4b) sur lequel est disposé un moyen de transmission (5) pour la commande de la transmission dans un sens de serrage (6) et dans un sens de libération (7) ;
dans lequel les rapports de transmission individuels dans le dérailleur peuvent être constitués par engagement par coopération de forme par le biais de trois cliquets commandables (8, 9, 10) ;
le dérailleur étant réalisé sous la forme d'un dérailleur à gâchette, dans lequel un actionneur (3a) ou un élément de serrage et un élément de libération (3b, 3c) reviennent dans la position centrale après que le changement de vitesse a été effectué,
**caractérisé en ce que**
le premier cliquet (8) est disposé sur l'élément mobile (4a, 4b) et coopère avec une première denture d'encliquetage (11) dans le boîtier (1) et sert à retenir l'élément mobile (4a, 4b) dans un rapport d'encliquetage de la denture d'encliquetage (11) et peut être soulevé hors de la denture d'encliquetage (11) par un doigt de soulèvement (16) pour permettre un déplacement de l'élément mobile (4a, 4b) dans le sens de libération (7) ;
et où, dans le sens de serrage (6) ainsi que dans le sens de libération (7), un seul mouvement de changement de vitesse peut permettre un changement de vitesse sur un ou plusieurs rapports de transmission en fonction de la longueur de la course de changement de vitesse dans le sens de serrage (6) et dans le sens de libération (7).

2. Dérailleur selon la revendication 1,
**caractérisé en ce que**
le dérailleur présente un actionneur (2a, 3a) qui peut être actionné à la fois dans le sens de serrage (6) et dans le sens de libération (7) pour un changement de vitesse, et revient dans sa position de départ lorsque l'opération de changement de vitesse est terminée.

3. Dérailleur selon la revendication 1 ou 2,
**caractérisé en ce que**
le dérailleur présente un élément de serrage (2b, 3b) pour déplacer l'élément mobile (4a, 4b) dans le sens de serrage (6) et un élément de libération (2c, 3c) pour déplacer l'élément mobile (4a, 4b) dans le sens de libération (7), l'élément de serrage (2b, 3b) et l'élément de libération (2c, 3c) revenant chacun dans leur position de départ après l'opération de changement de vitesse.

4. Dérailleur selon l'une quelconque des revendications 1 à 3,
**caractérisé en ce que**
l'actionneur (2a, 3a) est en liaison coopérante avec l'élément mobile (4a, 4b) par le biais d'un premier cliquet (8), d'un deuxième cliquet (9) et d'un troisième cliquet (10), un élément de transfert (14, 15) étant prévu pour le transfert des mouvements de commande entre l'actionneur (2a, 3a) et l'élément mobile (4a, 4b).

5. Dérailleur selon la revendication 4,
**caractérisé en ce que**
l'élément de transfert (14, 15) présente un doigt de soulèvement (16), qui coopère avec le premier cliquet (8), afin de libérer l'élément mobile (4a, 4b) dans le sens de libération (7).

6. Dérailleur selon la revendication 1 ou 5,
**caractérisé en ce que**
le premier cliquet (8) est disposé entre le boîtier (1) et l'élément mobile (4a, 4b).

7. Dérailleur selon la revendication 6,
**caractérisé en ce que**
le premier cliquet (8) est disposé sur l'élément mobile (4a, 4b) et coopère avec la première denture d'encliquetage (11) sur le boîtier (1).

8. Dérailleur selon l'une quelconque des revendications 1 à 7,
**caractérisé en ce qu'un**
deuxième cliquet (9) est disposé entre l'élément mobile (4a) et l'actionneur (2a) pour l'entraînement de l'élément mobile (4a) dans le sens de serrage (6).

9. Dérailleur selon la revendication 8,
**caractérisé en ce que**
le deuxième cliquet (9) est disposé sur l'actionneur (2a) et coopère avec une deuxième denture d'encliquetage (12a) sur l'élément mobile (4a).

10. Dérailleur selon l'une quelconque des revendications 1 à 9,
**caractérisé en ce que**
le deuxième cliquet (9) est disposé entre l'élément mobile (4a) et l'élément de serrage (2b) pour l'entraînement de l'élément mobile (4a) dans le sens de serrage (6).

11. Dérailleur selon la revendication 10,
**caractérisé en ce que**
le deuxième cliquet (9) est disposé sur l'élément de serrage (2b) et coopère avec la deuxième denture d'encliquetage (12a) sur l'élément mobile (4a).

12. Dérailleur selon la revendication 1 ou 3,
**caractérisé en ce qu'un**
troisième cliquet (10) est disposé entre l'élément de transfert (14) et l'élément de libération (2c) en vue de libérer l'élément mobile (4a) dans le sens de libération (6).

13. Dérailleur selon la revendication 12,
**caractérisé en ce que**
le troisième cliquet (10) est disposé sur l'élément de libération (2c) et coopère avec une troisième denture d'encliquetage (13a) sur l'élément de transfert (14).

14. Dérailleur selon l'une quelconque des revendications 1 à 13,
**caractérisé en ce que**
le dérailleur présente un premier nez de soulèvement (17a, 17b) et/ou un deuxième nez de soulèvement (18), le premier nez de soulèvement (17a, 17b) soulevant le deuxième cliquet (9) dans le sens de libération (7) et le deuxième nez de soulèvement (18) soulevant le troisième cliquet (10) dans le sens de serrage (6).

15. Dérailleur selon la revendication 14,
**caractérisé en ce que**
les nez de soulèvement (17a, 17b ; 18) sont disposés sur le boîtier (1).

16. Dérailleur selon l'une quelconque des revendications 1 à 15,
**caractérisé en ce que**
le deuxième cliquet (9) et le troisième cliquet (10) sont disposés sur un actionneur (3a) et les deux coopèrent avec l'élément de transfert (15), une deuxième denture d'encliquetage (12b) et une troisième denture d'encliquetage (13b) étant disposées sur l'élément de transfert (15), lesquelles sont orientées l'une contre l'autre et le deuxième cliquet (9) permettant l'entraînement dans le sens de serrage (6) et le troisième cliquet (10) permettant l'entraînement dans le sens de libération (7).

17. Dérailleur selon l'une quelconque des revendications 1 à 16,
**caractérisé en ce que**
le deuxième cliquet (9) est soulevé du premier nez de soulèvement (17b), lorsque le troisième cliquet (10) est déplacé dans le sens de libération (7) et **en ce qu'**inversement, le troisième cliquet (10) est soulevé du deuxième nez de soulèvement (18) lorsque le deuxième cliquet (9) est déplacé dans le sens de serrage (6).

18. Dérailleur selon l'une quelconque des revendications 1 à 17,
**caractérisé en ce que**
le deuxième cliquet (9) est disposé entre l'élément de transfert (15) et l'élément de serrage (3b) pour l'entraînement de l'élément de transfert (15) et avec celui-ci, de l'élément mobile (4b) dans le sens de serrage (6).

19. Dérailleur selon la revendication 18,
**caractérisé en ce que**
le deuxième cliquet (9) est disposé sur l'élément de serrage (3b) et coopère avec une deuxième denture d'encliquetage (12b) sur l'élément de transfert (15).

20. Dérailleur selon l'une quelconque des revendications 1 à 19,
**caractérisé en ce que**
le troisième cliquet (10) est disposé entre l'élément de transfert (15) et un élément de libération (3c) pour l'entraînement de l'élément de transfert (15) et avec celui-ci, de l'élément mobile (4b) dans le sens de libération (7).

21. Dérailleur selon la revendication 20,
**caractérisé en ce que**
le troisième cliquet (10) est disposé sur l'élément de libération (3c) et coopère avec une troisième denture d'encliquetage (13b) sur l'élément de transfert (15).

22. Dérailleur selon l'une quelconque des revendications 1 à 21,
**caractérisé en ce que**
l'élément mobile (4b) présente avec l'élément de transfert (15) au moins une liaison par coopération de forme dans le sens de serrage (6).

23. Dérailleur selon l'une quelconque des revendications 1 à 22,
**caractérisé en ce que**
les cliquets (8, 9, 10) sont connectés à pivotement à leur éléments (2a, 2b, 2c ; 3a, 3b, 3c ; 4a, 4b, 4c ; 14 ,15), et ils sont maintenus dans leur position d'engagement par un ressort sous précontrainte.

24. Dérailleur selon l'une quelconque des revendications 1 à 23,
**caractérisé en ce que**
les cliquets d'arrêt (8, 9, 10) se composent d'un matériau élastique et sont assemblés au niveau de leur fixation de telle sorte qu'ils puissent coopérer avec leurs dentures d'encliquetage associées (11 ; 12a, 12b ; 13a, 13b) dans les positions prévues pour eux dans le dérailleur monté complètement.

25. Dérailleur selon la revendication 24,
**caractérisé en ce que**
les cliquets (8, 9, 10) sont reliés d'une seule pièce avec les éléments (2a, 2b, 2c ; 3a, 3b, 3c ; 4a, 4b, 4c ; 14 ,15).

26. Dérailleur selon la revendication 24 ou 25,
**caractérisé en ce que**
les cliquets (8, 9, 10) sont en plastique.

27. Dérailleur selon l'une quelconque des revendications 1 à 27,
**caractérisé en ce que**
l'actionnement de l'élément mobile (4a, 4b) dans le sens d'une inversion cinématique ne se produit pas par soulèvement des cliquets (9, 10) mais par leur encliquetage.
